(19) Europäisches Patentamt
European Patent Office
Office européen des brevets

(11) **EP 4 597 075 A1**

(12) **EUROPÄISCHE PATENTANMELDUNG**

(43) Veröffentlichungstag:
**06.08.2025   Patentblatt 2025/32**

(21) Anmeldenummer: **24156120.8**

(22) Anmeldetag: **06.02.2024**

(51) Internationale Patentklassifikation (IPC):
**G01N 21/03** $^{(2006.01)}$    **G01N 21/71** $^{(2006.01)}$

(52) Gemeinsame Patentklassifikation (CPC):
**G01N 21/718; G01J 3/443; G01N 21/03;**
G01N 2201/1218

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität:  **31.01.2024   DE 102024102756**

(71) Anmelder: **Fraunhofer-Gesellschaft zur
Förderung
der angewandten Forschung e.V.
80686 München (DE)**

(72) Erfinder:
• **Basler, Carl
  79110 Freiburg (DE)**
• **Kardamaki, Evangelia
  79110 Freiburg (DE)**

(74) Vertreter: **WSL Patentanwälte Partnerschaft mbB
Kaiser-Friedrich-Ring 98
65185 Wiesbaden (DE)**

(54) **VERFAHREN UND SYSTEM ZUM BESTIMMEN EINES GEHALTS AN LITHIUM IN EINER WÄSSRIGEN LÖSUNG**

(57)      Gemäß der vorliegenden Erfindung wird ein Verfahren zum Bestimmen eines Gehalts an Lithium in einer wässrigen Lösung bereitgestellt, wobei das Verfahren die Schritte aufweist:

A) Bereitstellen der das Lithium enthaltenden Lösung mit einem Druck,

B) Aussetzen einer Oberfläche der Lösung gegenüber einem ein Gas enthaltenden Messvolumen,

wobei das Messvolumen von einer Schutzplatte begrenzt ist und

wobei die Schutzplatte einen minimalen Abstand **A** von der Oberfläche aufweist, wobei der minimale Abstand **A**

$$A = \frac{10}{P} \, bar \, cm$$

oder mehr beträgt, wobei **P** der minimale Druck der Lösung in dem Messvolumen in bar ist,

C) Erzeugen und Abstrahlen impulsförmiger elektromagnetischer Anregungsstrahlung, wobei die Anregungsstrahlung

eine Impulsdauer in einem Bereich von 1 ns bis 50 ns aufweist,

eine Energie pro Impuls von 10 mJ oder mehr aufweist und

eine Impulswiederholrate von 2Hz oder weniger aufweist,

D) Einstrahlen der Anregungsstrahlung durch die Schutzplatte in das Messvolumen,

E) Fokussieren der Anregungsstrahlung auf die Oberfläche, sodass ein Plasma der Lösung an der Oberfläche generiert wird,

F) Frequenzaufgelöstes Erfassen einer Intensität einer von dem Plasma erzeugten und durch die Schutzplatte aus dem Messvolumen austretenden Emissionsstrahlung und

G) Bestimmen des Gehalts an Lithium in der Lösung aus der Intensität.

EP 4 597 075 A1

Fig. 1

**Beschreibung**

Die vorliegende Erfindung betrifft ein Verfahren sowie ein System zum Bestimmen eines Gehalts an Lithium in einer wässrigen Lösung.

Das chemische Element Lithium ist aufgrund seiner Eignung zum Herstellen von Batterien, insbesondere von Akkumulatoren, von großer Bedeutung beim Wandel hin zu einer CO2-freien Industriegesellschaft. Die Nachfrage nach Lithium steigt in den vergangenen Jahren daher überdurchschnittlich. Die Gewinnung von Lithium erfolgt in großen Teilen im Tagebau. In Folge der großen Nachfrage wird jedoch auch die Gewinnung aus Grund-, Thermal- und Grubenwasser kommerziell immer interessanter. Auch die Wiedergewinnung von Lithium im Recyclingprozess aus Altbatterien gewinnt an Bedeutung.

Bei einem Großteil der Prozesse wird das Lithium aus einer wässrigen Lösung heraus an einem Sorbens angelagert. Zu einem späteren Zeitpunkt wird das Lithium mit einer Desoprtionslösung aus dem Sorbens abgelöst, herausgespült und weiterprozessiert. Eine Kernaufgabe der Messtechnik ist es daher bei solchen Prozessen, den Gehalt an Lithium in einer wässrigen Lösung zu bestimmen. Bisher erfolgt das Bestimmen des Gehalts an Lithium in einer wässrigen Lösung offline im Labor durch eine aufwändige optische Emissionsspektrometrie mittels induktiv gekoppeltem Plasma (ICP-OES; englisch Inductively Coupled Plasma Optical Emission Spectroscopy). Diese erfordert eine Probennahme aus dem Produktionsprozess sowie eine Probenaufbereitung und Ausführung unter Schutzgas.

Demgegenüber ist es Aufgabe der vorliegenden Erfindung, ein Verfahren und ein System zum Bestimmen eines Gehalts an Lithium in einer wässrigen Lösung bereitzustellen, die eine in-line-Messung in einem laufenden Prozess ermöglichen.

Die zuvor genannte Aufgabe wird erfindungsgemäß durch ein Verfahren zum Bestimmen eines Gehalts an Lithium in einer wässrigen Lösung gemäß dem beigefügten Anspruch 1 der vorliegenden Anmeldung gelöst. Dazu weist das Verfahren die Schritte auf:

A) Bereitstellen der das Lithium enthaltenden Lösung mit einem Druck,
B) Aussetzen einer Oberfläche der Lösung gegenüber einem ein Gas enthaltenden Messvolumen,

wobei das Messvolumen von einer Schutzplatte begrenzt ist und
wobei die Schutzplatte einen minimalen Abstand A von der Oberfläche aufweist, wobei der minimale Abstand A

$$A = \frac{10}{P} \, bar \, cm$$

oder mehr beträgt, wobei P der minimale Druck der Lösung in dem Messvolumen in bar ist,

C) Erzeugen und Abstrahlen impulsförmiger elektromagnetischer Anregungsstrahlung, wobei die Anregungsstrahlung

eine Impulsdauer in einem Bereich von 1 ns bis 50 ns aufweist,
eine Energie pro Impuls von 10 mJ oder mehr aufweist und
eine Impulswiederholrate von 2Hz oder weniger aufweist,

D) Einstrahlen der Anregungsstrahlung durch die Schutzplatte in das Messvolumen,
E) Fokussieren der Anregungsstrahlung auf die Oberfläche, sodass ein Plasma der Lösung an der Oberfläche generiert wird,
F) Frequenzaufgelöstes Erfassen einer Intensität einer von dem Plasma erzeugten und durch die Schutzplatte aus dem Messvolumen austretenden Emissionsstrahlung und
G) Bestimmen des Gehalts an Lithium in der Lösung aus der Intensität.

Es ist die der vorliegenden Erfindung zugrunde liegende Idee, den Gehalt an Lithium in der wässrigen Lösung mit einem als laserinduzierte Plasmaspektroskopie (kurz LIPS oder LIBS; englisch laser-induced breakdown spectroscopy) bekannten Verfahren zu erfassen. Erstaunlicherweise ist dieses Verfahren zur In-line-Prozessüberwachung geeignet.

Erfindungsgemäß wird das Plasma nicht in der Lösung, sondern über der Oberfläche der Lösung in einem Gas enthaltenden Messvolumen generiert und die dort erzeugte Emissionsstrahlung spektrometrisch, d.h. frequenzaufgelöst, erfasst. Die Intensität der so generierten Emissionsstrahlung ist ungleich stärker als die Intensität der Emissionsstrahlung von Plasmen innerhalb einer Flüssigkeit. Durch das Generieren des Plasmas an bzw. über der Oberfläche der Flüssigkeit verringert sich die Kühlwirkung der Lösung.

Die wässrigen Lösungen, in denen das Lithium typischerweise enthalten ist, haben nur eine sehr geringe Absorption für die Anregungsstrahlung. Sie sind für alle Wellenlängen annähernd transparent. Daher ist es notwendig, die kurzen Impulse der elektromagnetischen Anregungsstrahlung mit einer hohen Energie zu versehen, um dennoch an der Oberfläche der Lösung ein Plasma generieren zu können. Erfindungsgemäß beträgt die Energie pro Impuls 10 mJ oder mehr.

Zudem hat sich herausgestellt, dass auch bei dem Generieren des Plasmas an und über der Oberfläche der Lösung Wellen auf der Oberfläche der Lösung und Blasen unter der Oberfläche der Lösung generiert werden.

Eine solche Wellenbildung führt zu einer Variation der Ein- bzw. Ankopplung der elektromagnetischen Anregungsstrahlung in die Oberfläche der Flüssigkeit und damit wiederum zu einer Änderung in der Intensität der von dem Plasma erzeugten Emissionsstrahlung. Zudem führen die Blasen dazu, dass Spritzer der Lösung entstehen, welche die Optik verunreinigen können, was eine weitere Messung unmöglich macht.

Daher werden erfindungsgemäß zwei Maßnahmen getroffen, um eine zuverlässige in-line-Messung zu ermöglichen.

Zum einen beträgt die Impulswiederholrate erfindungsgemäß 2 Hz oder weniger. Eine solche vergleichsweise niedrige Impulswiederholrate lässt die von einem Impuls generierte Welle an der Oberfläche der Lösung weitgehend abklingen, bevor der nächste Impuls auf die Oberfläche auftrifft.

Zum anderen ist das Messvolumen, d.h. dasjenige Volumen über der Oberfläche, das mit dem Gas befüllt ist, von einer Schutzplatte begrenzt. Diese Schutzplatte ist sowohl für die elektromagnetische Anregungsstrahlung als auch für die in dem Plasma erzeugte Emissionsstrahlung transparent. Sowohl die Anregungsstrahlung wird durch die Schutzplatte in das Messvolumen eingestrahlt als auch wird die Emissionsstrahlung durch die Schutzplatte aus dem Messvolumen herausgeführt. Die Schutzplatte dient sowohl der Begrenzung des Messvolumens als auch dem Schutz beispielsweise der Strahlungsquelle für die Anregungsstrahlung vor Verunreinigungen. In einer Ausführungsform ist die Schutzplatte eine herkömmliche Glasoder Kunststoffplatte sein. In einer Ausführungsform ist die Schutzplatte eine Linse einer Optik.

In einer Ausführungsform wird die Schutzplatte beheizt, um die Bildung von Kondensat der Lösung zu verhindern.

Bei entsprechender Wellenbildung und Auftreffen von Impulsen der Anregungsstrahlung auf die Oberfläche der Lösung kann jedoch Lösung auf die Schutzplatte treffen und diese intransparent für die Anregungsstrahlung und/oder Emissionsstrahlung machen. Daher muss erfindungsgemäß die Schutzplatte einen minimalen Abstand von der Oberfläche der Lösung aufweisen, sodass Spritzer der Lösung nicht oder nur in sehr geringem Maß auf die Schutzplatte gelangen. Der erforderliche minimale Abstand hängt jedoch vom Druck im Messvolumen und damit vom Druck der Lösung ab. Daher beträgt der minimale Abstand A

$$A = \frac{10}{P} bar\ cm$$

oder mehr. Dann ist das Risiko, dass Spritzer der wässrigen Lösung auf die Schutzplatte treffen und eine Messung erschweren, erheblich reduziert. Dabei ist P der minimale Druck der Lithium enthaltenden Lösung in dem Messvolumen in bar. Dieser ist in einem abgeschlossenen Messvolumen gleich dem Druck des Gases in dem Messvolumen. In der vorgenannten Formel wird der Druck in bar eingesetzt. Die Einheit des mit dieser empirischen Formel erhaltenen Abstands ist Zentimeter.

Beispielsweise beträgt bei einem Druck von 1 bar der Lösung der minimale Abstand zwischen der Oberfläche der Lösung und der Schutzplatte mindestens 10 cm.

Der so bestimmte Abstand A ist der Mindestabstand, den die Schutzplatte von der Oberfläche der Lösung für einen minimalen (erwartbaren) Druck der Lösung haben muss, um zuverlässig die Messung zu ermöglichen. Minimaler Abstand bedeutet, dass kein Abschnitt der Schutzplatte (diese kann in sich gekrümmt sein oder gegenüber der Oberfläche geneigt eingebaut sein) den angegebenen Mindestabstand unterschreitet. In einer Ausführungsform der Erfindung ist der minimale Abstand A zumindest senkrecht zu der Oberfläche oder senkrecht zu der Schutzplatte gemessen.

Der minimale Abstand der Schutzplatte, den es mindestens einzuhalten gilt, nimmt mit dem minimalen Druck, der für die Lösung und damit das Messvolumen im Prozess zu erwarten ist, zu. Allerdings hat sich gezeigt, dass mit zunehmenden Messvolumen Änderungen des Drucks der Lösung zu größeren Änderungen des Füllstands und damit des Abstands der Oberfläche von der Schutzplatte bzw. der fokussierenden Optik führen. Daher beträgt in einer Ausführungsform der minimale Abstand A der Schutzplatte von der Oberfläche

$$A = \frac{600}{P} bar\ cm$$

oder weniger, bevorzugt

$$A = \frac{100}{P} bar\ cm$$

oder weniger und besonders bevorzugt

$$A = \frac{50}{P} bar\ cm$$

oder weniger. Der so bestimmte Abstand A ist der Höchstabstand, den die Schutzplatte von der Oberfläche der Lösung für einen minimalen (erwartbaren) Druck der Lösung haben darf, damit Druckschwankungen immer noch eine zuverlässige Messung zulassen.

In einer Ausführungsform liegt der minimale Abstand A der Schutzplatte von der Oberfläche in dem folgenden Bereich

$$\frac{10}{P} bar\ cm \leq A \leq \frac{600}{P} bar\ cm,$$

bevorzugt in dem Bereich

$$\frac{10}{P} bar\ cm \leq A \leq \frac{100}{P} bar\ cm$$

und besonders bevorzugt in dem Bereich

$$\frac{10}{P} bar\ cm \leq A \leq \frac{50}{P} bar\ cm.$$

In einer Ausführungsform liegt der in dem Verfahren zu erwartende minimale Druck der Lösung in einem Bereich von 1 bar bis 50 bar, vorzugsweise in einem Bereich von 1 bar bis 20 bar.

Das Messvolumen bezeichnet dasjenige Volumen, welches das Gas enthält und von der Oberfläche der wässrigen Lösung und von der Schutzplatte begrenzt ist. In einer Ausführungsform der Erfindung ist das Messvolumen Teil eines Tanks, der die wässrige Lösung enthält. In einer Ausführungsform der Erfindung ist das Messvolumen Teil einer Messzelle, die auch die wässrige Lösung enthält.

Das in dem Messvolumen enthaltene Gas kann auch Teil eines Gasgemisches sein. In einer Ausführungsform der Erfindung ist das Gas in dem Messvolumen ein Schutzgas, beispielsweise Argon.

In einer Ausführungsform der Erfindung hat die Anregungsstrahlung eine Impulsdauer in einem Bereich von 3 ns bis 10 ns. In einer Ausführungsform der Erfindung liegt die Wellenlänge der Anregungsstrahlung im optischen Bereich, vorzugsweise in einem Wellenlängenbereich von 300 nm bis 3.000 nm. In einer Ausführungsform der Erfindung beträgt die Wellenlänge der Anregungsstrahlung 1064 nm oder 532 nm.

In einer Ausführungsform der Erfindung umfasst das Bereitstellen der das Lithium enthaltenden Lösung das Bereitstellen einer das Lithium enthaltenden strömenden Lösung. Dabei strömt die Lösung in einer Ausführungsform in einer Strömungsrichtung im Wesentlichen parallel zu der Oberfläche oder parallel zu der Oberfläche.

In einer Ausführungsform wird mit dem Verfahren eine Konzentrationsbestimmung mit einem Fehler von in einem Bereich von 5 % bis 10 % erreicht. Eine Konzentration des Lithiums in einem Bereich von 5 mg/Liter bis 1000 mg/Liter, vorzugsweise von mehr als 1000 mg/Liter, ist messbar.

Eine Änderung der Position der Oberfläche bezogen auf den Fokus führt dazu, dass die Effizienz der Plasmaerzeugung an der Oberfläche variiert. Damit hängt die Intensität der Emissionsstrahlung maßgeblich vom Niveau der Oberfläche der Lösung bzw. dem Abstand der Oberfläche der Lösung von der Schutzplatte ab. In einer Ausführungsform der Erfindung gilt es, diese Schwankungen in der Intensität der von dem Spektrometer erfassten Emissionsstrahlung zu minimieren.

In einer Ausführungsform mit einer in-line Anwendung des erfindungsgemäßen Verfahrens schwankt der Druck und damit der Füllstand der Lösung gegenüber dem Fokus der Anregungsstrahlung. Dies wiederum führt bei einer konstanten Position des Fokus zu einer Variation in der Effizienz der Plasmaerzeugung. Zudem führt auch die zuvor beschriebene Wellenbildung dazu, dass sich die Position der Oberfläche der Lösung, auf welche die Anregungsstrahlung fokussiert wird, während des Prozesses lokal gegenüber der Position des Fokus ändert.

In einer Ausführungsform der Erfindung erfolgt daher das Fokussieren in Schritt E) derart, dass die numerische Apertur des Fokus der Anregungsstrahlung auf der Oberfläche 0,1 oder weniger, bevorzugt 0,05 oder weniger und besonders bevorzugt 0,02 oder weniger beträgt. Dies bedeutet, dass sich der Strahldurchmesser der Anregungsstrahlung im Bereich um den Fokus herum nur vergleichsweise langsam ändert. Eine solche "weiche" Fokussierung verringert den Einfluss, den eine Druckschwankung und Welle auf die Intensität der von dem Plasma generierten Emissionsstrahlung hat.

In einer Ausführungsform der Erfindung beträgt die numerische Apertur des Fokus der Anregungsstrahlung auf der Oberfläche mindestens 0,002. Die geringen Aperturen gehen einher mit einer großen Rayleighlänge. In einer Ausführungsform der Erfindung liegt die numerische Apertur des Fokus der Anregungsstrahlung auf der Oberfläche in einem Bereich von 0,002 bis 0,1.

In einer Ausführungsform der Erfindung erfolgt das Fokussieren in Schritt E) derart, dass der Fokus der Anregungsstrahlung auf der Oberfläche eine Rayleighlänge von 3 mm oder mehr aufweist. In einer Ausführungsform der Erfindung erfolgt das Fokussieren in Schritt E) derart, dass der Fokus der Anregungsstrahlung auf der Oberfläche eine Rayleighlänge von 50 mm oder weniger aufweist. In einer Ausführungsform der Erfindung erfolgt das Fokussier in Schritt E) derart, dass der Fokus der Anregungsstrahlung auf der Oberfläche eine Rayleighlänge in einem Bereich von 3 mm bis 50 mm aufweist.

Auch die numerische Apertur einer Optik für das Erfassung der Emissionsstrahlung beeinflusst die Intensität der erfassten Emissionsstrahlung. Daher erfolgt das frequenzaufgelöste Erfassen in Schritt F) in einer Ausführungsform derart, dass die numerische Apertur 0,15 oder weniger beträgt.

In einer Ausführungsform der Erfindung ist das Mesvolumen abgeschlossen und abschnittsweise von der Oberfläche der Lösung begrenzt.

In einer Ausführungsform sind das Messvolumen und die Lösung in einem Behälter, vorzugsweise in einem Tank oder einer Messzelle, eingeschlossen. In einer Ausführungsform weist der Behälter eine Eintrittsöffnung und eine Austrittsöffnung für die Lösung auf. Dabei ist in einer Ausführungsform die Austrittsöffnung vollständig unterhalb der Oberfläche der Lösung angeordnet. Ist die Austrittsöffnung vollständig unterhalb der Oberfläche der Lösung angeordnet, so führt ein steigender Druck der Lösung zu einem Ansteigen des Drucks im Messvolumen, der einem Anstieg der Oberfläche, d.h. einer Verringerung des Abstands zwischen der Oberfläche der Lösung und der Schutzplatte, entgegenwirkt.

In einer Ausführungsform der Erfindung ist auch die Eintrittsöffnung vollständig unterhalb der Oberfläche der Lösung angeordnet. Auf diese Weise wird verhindert, dass beim Einströmen der Lösung in den Behälter Wellen an der Oberfläche der Lösung gebildet werden.

In einer Ausführungsform der Erfindung weist das Messvolumen ein Volumen auf, das kleiner ist als ein Volumen, das gegeben ist durch das Produkt aus der Fläche der Oberfläche der Lösung, die dem Gas ausgesetzt ist, und dem minimalen Abstand zwischen der Oberfläche und der Schutzplatte. Eine solche Verringerung des Messvolumens verglichen mit einem gedachten Volumen, das von der dem Gas ausgesetzten Oberfläche begrenzt ist, beispielsweise einem Zylinder oder einem Quader über der Oberfläche mit einer Höhe, die gleich dem minimalen Abstand zwischen der Oberfläche und der Schutzplatte ist, verringert den Einfluss, den Änderungen des Drucks der Lösung auf den Abstand der Oberfläche von der Schutzplatte haben. Dies wiederum reduziert den Einfluss, den Druckschwankungen auf die Intensität der plasmagenerierten Emissionsstrahlung haben.

In einer Ausführungsform der Erfindung wird das Gas in das Messvolumen eingeleitet oder aus diesem ausgeleitet, sodass der Abstand zwischen der Oberfläche der Lösung der

Schutzplatte konstant ist. In einer solchen Ausführungsform erfolgt eine Regelung, sodass Druckänderungen in der Lösung nicht zu einer Abstandsänderung zwischen der Oberfläche und der Schutzplatte führen.

In einer Ausführungsform der Erfindung verlaufen die Anregungsstrahlung und eine Blickrichtung eines Detektors zum Erfassen der Intensität in Schritt F) in dem Messvolumen koaxial.

In einer Ausführungsform der Erfindung schließt die Anregungsstrahlung und optional eine Blickrichtung eines Detektors zum Erfassen der Intensität in Schritt F) mit der Oberfläche der Lösung einen Winkel ungleich 90° ein. Es hat sich herausgestellt, dass Spritzer, die aufgrund des Auftreffens von Impulsen der Anregungsstrahlung auf die Oberfläche erzeugt werden, unabhängig von dem Einfallswinkel der Anregungsstrahlung immer in etwa senkrecht zur Oberfläche aus dieser herausgeschleudert werden. Durch ein Verkippen der Anregungsstrahlung und optional der Blickrichtung des Detektors für die Emissionsstrahlung gelangen Spritzer von der Oberfläche der Lösung nicht in einen Bereich der Schutzplatte, durch den die Anregungsstrahlung und optional die Emissionsstrahlung transmittiert werden. Dies reduziert den Einfluss, den Spritzer auf die Messung haben können.

In einer Ausführungsform der Erfindung erfolgt das Erfassen der Intensität der Emissionsstrahlung in Schritt F) bei einer für Lithium charakteristischen Wellenlänge. In einer Ausführungsform der Erfindung erfolgt das Erfassen in Schritt F) bei einer Wellenlänge von 671 nm. Dort liegt die stärkste Emissionslinie von Lithium. In einer Ausführungsform der Erfindung erfolgt das Erfassen in Schritt F) bei einer Wellenlänge von 610,5 nm.

In einer Ausführungsform der Erfindung wird die Intensität bei der charakteristischen Wellenlänge mit einer Intensität eines anderen Bestandteils der Lösung, der eine konstante Konzentration aufweist, normiert. Das Normieren auf eine Referenzlinie eines anderen Bestandteils der Lösung mit einer bekannt und über die Messung des erfindungsgemäßen Verfahrens hin konstanten Konzentration ermöglicht es, Intensitätsschwankungen aufgrund anderer Faktoren als einer Änderung der Konzentration des Lithiums in der Lösung zumindest teilweise auszugleichen. Bei einer Sole kann beispielsweise die Natriumlinie, beispielsweise bei 589 nm, für eine solche Normierung herangezogen werden.

In einer Ausführungsform der Erfindung werden die Messungen von mindestens fünf Impulsen der Anregungsstrahlung gemittelt. In einer Ausführungsform der Erfindung werden vor der Mittelung Messergebnisse, die oberhalb und unterhalb von Messschwellenwerten liegen, aussortiert, um die Genauigkeit der Messung zu erhöhen.

In einer Ausführungsform der Erfindung wird das erfindungsgemäße Verfahren in einem Verfahren zum Gewinnen von Lithium aus einer Sole verwendet.

Das erfindungsgemäße Verfahren zum Bestimmen des Gehalts an Lithium in einer wässrigen Lösung lässt sich insbesondere verwenden, um das in einer Sole enthaltene Lithium zu quantifizieren. Dabei kann die Sole eine natürliche Sole, beispielsweise Grundwasser oder Thermalwasser, sein. Bei der Gewinnung von Lithium muss das Lithium der Sole entzogen werden. Das Verfahren zum Gewinnen des Lithiums aus einer solchen Sole umfasst die folgenden Schritte:

i) Durchleiten der Sole mit dem Lithium durch einen Sorbens,
ii) Anlagern des Lithiums an den Sorbens,
iii) Durchleiten einer Desorptionslösung durch den Sorbens und
iv) Ablösen des Lithiums aus dem Sorbens mit der Desorptionslösung.

Das erfindungsgemäße Verfahren kann an unterschiedlicher Stelle in dem Verfahren zum Gewinnen von Lithium aus der Sole verwendet werden. In einer Ausführungsform der Erfindung wird ein Gehalt an Lithium in einer Flussrichtung hinter dem Sorbens mit dem erfindungsgemäßen Verfahren bestimmt. Ein solcher Sorbens sättigt nach der Aufnahme einer bestimmten Menge an Lithium. Rechtzeitig vor der vollständigen Sättigung gilt es, das Lithium von dem Sorbens abzulösen, um dann den Sorbens erneut zum Anlagern von Lithium aus der Sole zu verwenden. Misst man den Gehalt an Lithium in der Flussrichtung hinter dem Sorbens, so ist dieser Gehalt unter der Annahme, dass die Konzentration des Lithiums in der geförderten Sole in etwa konstant ist, ein Maß für die Sättigung des Sorbens.

In einer alternativen oder zusätzlichen Ausführungsform wird der Gehalt an Lithium in der Desorptionslösung in der Flussrichtung hinter dem Sorbens mit dem erfindungsgemäßen Verfahren bestimmt. In einer solchen Ausführungsform der Erfindung ist das Gehalt an Lithium in der Desorptionslösung ein Maß dafür, inwieweit der Sorbens wieder zum Anlagern von Lithium bereitet ist.

In einer Ausführungsform der Erfindung wird eine einzige Messzelle hinter dem Sorbens sowohl zum Bestimmen des Gehalts an Lithium in der Sole als auch zum Bestimmen des Gehalts an Lithium in der Desorptionslösung verwendet. In einer solchen Ausführungsform der Erfindung ist die verwendete Messzelle vollständig entleerbar.

In einer Ausführungsform der Erfindung wird das erfindungsgemäße Verfahren in einem Verfahren zum Gewinnen von Lithium aus einer Altbatterie verwendet.

In einer Ausführungsform der Erfindung wird das erfindungsgemäße Verfahren in einem Verfahren zum Gewinnen von Lithium aus einer Altbatterie verwendet. Ein solches Verfahren zum Gewinnen von Lithium aus einer Altbatterie umfasst die Schritte:

 i) mechanisches Zerkleinern der Altbatterie,
 ii) Herauslösen von Lithium mit einer wässrigen Lösung aus der in Schritt i) zerkleinerten Altbatterie,
 iii) Durchleiten der wässrigen Lösung mit Lithium durch einen Sorbens,
 iv) Anlagern des Lithiums an den Sorbens,
 v) Durchleiten einer Desorptionslösung durch den Sorbens und
 vi) Ablösen des Lithiums aus dem Sorbens mit der Desorptionslösung.

Es versteht sich, dass auch in einem solchen Verfahren zum Gewinnen von Lithium aus einer Altbatterie das Bestimmen des Gehalts an Lithium sowohl in der wässrigen Lösung als auch in der Desorptionslösung mit dem erfindungsgemäßen Verfahren erfolgen kann.

In einer Ausführungsform der Erfindung ist die Desorptionslösung ein saures Lösungsmittel.

Die zuvor genannte Aufgabe wird zudem auch durch ein System zum Bestimmen eines Gehalts an Lithium in einer wässrigen Lösung gemäß dem darauf gerichteten unabhängigen Anspruch dieser Anmeldung gelöst. Dabei weist das System auf:

 ein in einem Betrieb des Systems ein Gas enthaltendes Messvolumen und ein in dem Betrieb des Systems die Flüssigkeit aufnehmendes Flüssigkeitsvolumen,

  wobei das Messvolumen und das Flüssigkeitsvolumen derart ausgestaltet sind, dass das Gas und eine Oberfläche der Flüssigkeit in dem Betrieb des Systems miteinander in Kontakt sind,
  wobei das Flüssigkeitsvolumen eine Eintrittsöffnung und eine Austrittsöffnung für die Lösung aufweist,
  wobei das Messvolumen von einer Schutzplatte begrenzt ist und
  wobei die Schutzplatte einen minimalen Abstand A oder mehr von der Austrittsöffnung aufweist, wobei der minimale Abstand A

$$A = \frac{10}{P} bar\ cm$$

oder mehr beträgt, wobei P der minimale Druck der Lösung in dem Messvolumen in bar ist, eine Strahlungsquelle zum Erzeugen und Abstrahlen impulsförmiger elektromagnetischer Anregungsstrahlung, wobei die Strahlungsquelle derart ausgestaltet ist, dass in dem Betrieb des Systems die Anregungsstrahlung

 eine Impulsdauer in einem Bereich von 1 Nanosekunde bis 50 Nanosekunden aufweist,
 eine Energie pro Impuls von 10 mJ oder mehr aufweist und
 eine Impulswiederholrate von 2 Hz oder weniger aufweist,
 wobei die Strahlungsquelle derart angeordnet und ausgestaltet ist, dass in dem Betrieb des Systems die Anregungsstrahlung durch die Schutzplatte in das Messvolumen eingestrahlt wird,

eine fokussierende Optik,
wobei die Optik derart angeordnet und ausgestaltet ist, dass die Optik in dem Betrieb des Systems die Anregungsstrahlung auf die Oberfläche fokussiert, so dass ein Plasma der Flüssigkeit an der Oberfläche generiert wird,
ein Spektrometer,
wobei das Spektrometer derart angeordnet und ausgestaltet ist, dass das Spektrometer in dem Betrieb des Systems eine Intensität einer von dem Plasma erzeugten und durch die Schutzplatte aus dem Messvolumen austretenden Emissionsstrahlung frequenzaufgelöst erfasst, und
eine Auswertungseinrichtung,
wobei die Auswertungseinrichtung derart mit dem Spektrometer verbunden ist, dass die Auswertungseinrichtung in dem Betrieb des Systems ein die Intensität repräsentierendes Signal von dem Spektrometer empfängt, und wobei die Auswertungseinrichtung derart eingerichtet ist, dass die Auswertungseinrichtung in dem Betrieb des Systems aus dem Signal den Gehalt an Lithium in der Lösung berechnet.

Soweit zuvor Aspekte der Erfindung zuvor im Hinblick auf Ausführungsformen des Verfahrens beschrieben wurden, so gelten diese auch für Ausführungsformen des entsprechenden Systems zum Bestimmen eines Gehalts an Lithium in einer wässrigen Lösung und umgekehrt. Soweit das Verfahren mit einem System gemäß dieser Erfindung ausgeführt wird, so weist dieses die entsprechenden Einrichtungen hierfür auf. Insbesondere sind Ausführungsformen des Systems zum Ausführen der zuvor beschriebenen Ausführungsformen des Verfahrens geeignet.

Weitere Vorteile, Merkmale und Anwendungsmöglichkeiten der vorliegenden Erfindung werden anhand der folgenden Beschreibung von Ausführungsformen und der dazugehörigen

Figuren deutlich. In den Figuren sind gleiche Elemente mit identischen Bezugszeichen bezeichnet.

Figur 1    ist eine schematische Darstellung eines erfindungsgemäßen Systems.

Figur 2    ist eine schematische Darstellung einer Messzelle für das System aus Figur 1.

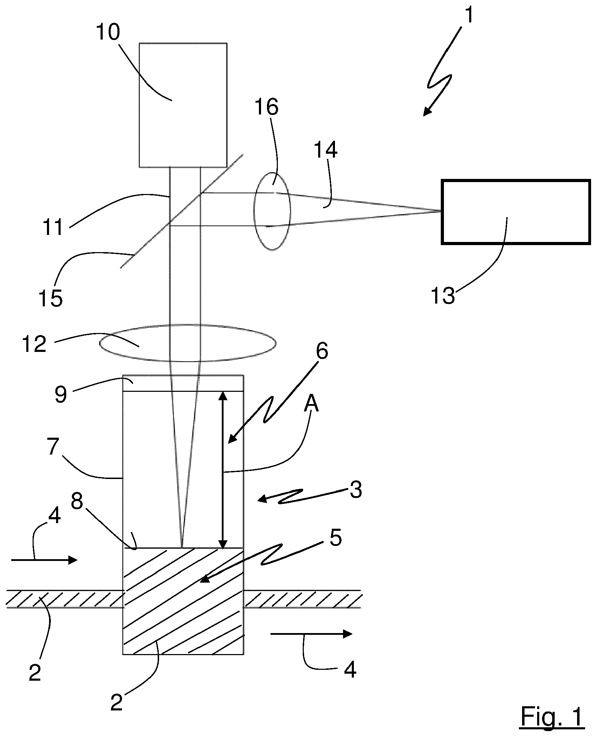

In Figur 1 ist ein erfindungsgemäßes System 1 zum Bestimmen eines Gehalts an Lithium in einer wässrigen Lösung schematisch dargestellt. Anhand dieses beispielhaften Systems 1 wird auch der Ablauf des erfindungsgemäßen Verfahrens nachstehend beschrieben.

System und Verfahren dienen in der beschriebenen Variante dazu, den Gehalt an Lithium in einer aus einem geothermischen Bohrloch strömenden Sole 2 zu bestimmen. Zu diesem Zweck wird die unter einem Druck von maximal 20 bar stehende Sole 2 durch eine Messzelle 3 geleitet.

In dem gezeigten Beispiel ist die Messzelle 3 in der Strömungsrichtung 4 hinter einem Absorber mit einem Sorbens für das Lithium (nicht gezeigt) angeordnet. Während des Absorptionsprozesses wird das Lithium der Sole 2 an dem Sorbens angelagert und reichert sich daher in der Sole 2, welche anschließend die Messzelle 3 durchfließt, ab. Wenn das Sorbens in die Sättigung geht, so ändert sich typischerweise der Gehalt an Lithium in der Sole in der Messzelle 3 nicht mehr. Dies wird als Indikator dafür gesehen, dass der Sorbens mit einer Desorptionslösung gespült werden muss, um das Lithium aus dem Sorbens abzulösen und der Sorbens dann erneut für die Anlagerung von Lithium aus der Sole 2 zu verwenden.

Die Messzelle 3 umfasst neben dem Flüssigkeitsvolumen 5, das die Sole 2 ausfüllt ist, ein Messvolumen 6, das mit Argon als Schutzgas gefüllt ist. Das Messvolumen 6 ist ein abgeschlossenes Volumen, aus dem das Gas nicht austreten kann und in das auch kein Gas einströmt. Der Druck in der Messzelle ist im Flüssigkeitsvolumen 5 und im Messvolumen 6 gleich und durch den Druck der Sole 2 bestimmt. Das Messvolumen 6 wird neben Gehäusewänden 7 von der Oberfläche 8 der Sole 2 und von einer Glasplatte 9 als Teil des Gehäuses der Messzelle 3 abgeschlossen.

Zum Bestimmen des Gehalts an Lithium in der Sole 2 erzeugt ein Laser 10 elektromagnetische Anregungsstrahlung 11. Die elektromagnetische Anregungsstrahlung weist kurze Impulse bei einer Mittenwellenlänge von 1064 nm, einer Impulsdauer von 10 ns, einer Energie pro Impuls von 30 mJ und einer Impulswiederholrate von 1 Hz auf. Diese kurzen elektromagnetischen Impulse der Anregungsstrahlung 11 werden mithilfe einer fokussierenden Optik 12 auf die Oberfläche 8 der Sole 2 fokussiert.

Die Glasplatte 9 als Schutzplatte schließt nicht nur das Messvolumen 6 der Messzelle 3 ab, sondern dient auch dem Schutz der Optik 12 sowie des Lasers 10 und eines Spektrometers 13 vor Verunreinigung durch die Sole 2. Die Glasplatte 9 ist sowohl für die Anregungsstrahlung 11 als auch für die Emissionsstrahlung 14 transparent.

Die Anregungsstrahlung 11 wird mithilfe der fokussierenden Optik 12 so auf die Oberfläche 8 der Sole 2 fokussiert, dass oberhalb der Oberfläche 8 ein Plasma der Sole 2 generiert wird. Dieses Plasma 2 erzeugt Emissionsstrahlung 14, die durch die Schutzplatte 9, einen dikroetischen Spiegel 15 und eine abbildende Optik 16 auf den Detektor des Spektrometers 13 gelangt. Das Spektrometer 13 erfasst frequenzaufgelöst eine Intensität der von dem Plasma generierten Emissionsstrahlung 14. Lithium weist eine spezifische Linie der Emission bei 671 nm auf. Die Intensität dieser Linie hängt unmittelbar von der Konzentration des Lithiums in dem über der Sole 2 generierten Plasma ab. Das Niveau der Oberfläche 8 der Sole 2 in der Messzelle 3 variiert mit dem Druck der Sole 2. Schwankt dieser zu einem höheren Druck hin, so steigt die Oberfläche 8 an. Bezogen auf die Schutzplatte 9 bedeutet dies, dass der Abstand A zwischen der Oberfläche 8 und der Schutzplatte 9 mit dem Druck der Sole 2 in der Messzelle 3 variiert.

Um die erforderliche Energiedichte der Anregungsstrahlung 11 an der Oberfläche 8 der Sole 2 zum Zünden des Plasmas zu erreichen, muss die Anregungsstrahlung 11 auf die Oberfläche 8 fokussiert werden. Damit führt jede Änderung des Niveaus der Oberfläche 8 zu einer Änderung des Strahldurchmessers der Anregungsstrahlung 11 auf der Oberfläche und damit zu einer Änderung der Energiedichte. Dies wiederum führ zu einer Änderung der Intensität der Emissionsstrahlung 14, die vom Plasma generiert wird.

Um den Einfluss, den eine Druckschwankung der Sole 2 und eine Wellenbildung an der Oberfläche 8 der Sole 2 auf die Intensität der Emissionsstrahlung haben, zu reduzieren, sind in der dargestellten Ausführungsform des Systems 1 und dem damit realisierten Verfahren drei Maßnahmen implementiert.

Die Impulswiederholrate der Impulse der Anregungsstrahlung 11 beträgt nur 1 Hz. Bei einer solch niedrigen Impulswiederholrate klingt einer von einem Impuls verursachte Wellenbildung an der Oberfläche der Lösung 2 weitgehend ab, bevor der nächste Impuls auf die Oberfläche 8 auftrifft.

Das Messvolumen 8 hat einen minimalen Abstand A gemessen senkrecht zu der Glasplatte 9 und der Oberfläche 8 von 0,5 cm. Da die Glasplatte 9 im Wesentlichen parallel zu der Oberfläche 8 ist, ist der Abstand zwischen Glasplatte 9 und Oberfläche 8 über die gesamte Erstreckung der Glasplatte 9 hinweg konstant gleich dem minimalen Abstand A.

Dadurch, dass der durch den maximalen Druck der Sole 2 in der Messzelle 3 bestimmte Mindestabstand eingehalten ist, ist die Wahrscheinlichkeit dafür reduziert, dass Spritzer der Sole 2 auf die Glasplatte 9 treffen und dadurch eine Messung der Konzentration des Lithiums erschweren oder unmöglich machen.

Mit einer Änderung des Drucks der Sole 2 geht eine Änderung ihres Füllstands einher. Damit ändert sich der Abstand der Oberfläche 8 von der Glasplatte 9 bzw. der fokussierenden Optik 12 für die Anregungsstrahlung 11. Dies wiederum führt bei einer konstanten Position des Fokus zu einer Variation in der Effizienz der Plasmaerzeugung. Daher hat die fokussierende Optik 12 eine numerische Apertur von 0,02, was einer Rayleighlänge von etwa 3 mm entspricht. Dabei hat die fokussierende Optik 12 eine Brennweite von f = 250 mm und erzeugt einen FWHM-Strahldurchmesser von etwa 15 Mikrometer. Durch diese "weiche" Fokussierung verringert sich der Einfluss einer Druckschwankung auf die Intensität der von dem Plasma generierten Emissionsstrahlung.

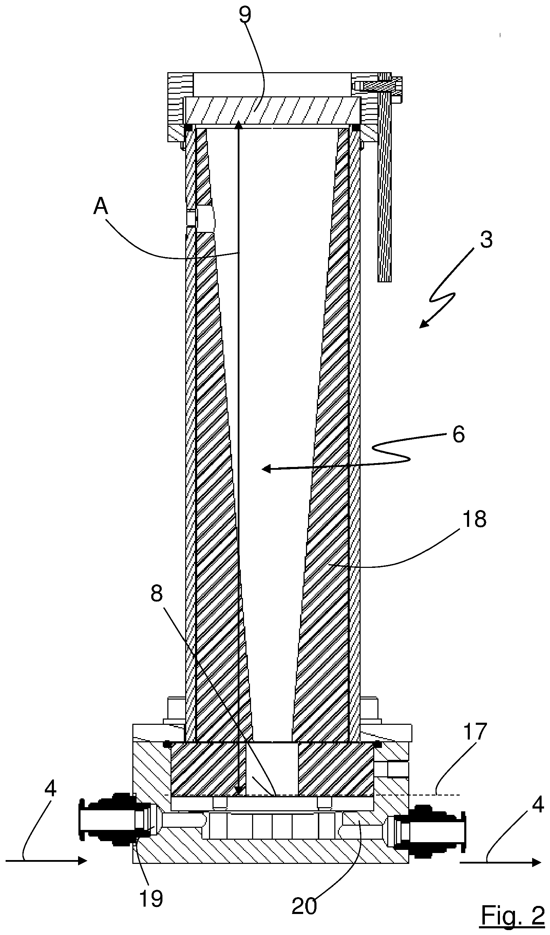

Eine weitere Möglichkeit, den Einfluss von Schwankungen des Drucks der Sole innerhalb der Messzelle 3 auf den Füllstand, d.h. das Niveau der Oberfläche 8 der Sole 2, zu reduzieren, ist es, das Volumen des Messvolumens 6 zu reduzieren, ohne die Fläche der Oberfläche 8 zu verringern. Figur 2 zeigt die Realisierung dieser Maßnahme anhand einer beispielhaften Ausgestaltung. Mit dem Bezugszeichen 17 ist die maximale Fülle, welche die Sole 2 in der Messzelle 3 erreichen kann, bezeichnet. Für diese maximalen Füllhöhe ist die Messzelle 3 konzipiert. Berechnet man das Volumen eines Zylinders, der durch die Fläche der Oberfläche 8 der Sole (Bodenfläche) und den Abstand A zwischen der Glasplatte 9 und der Oberfläche 8 definiert ist, so ist dieser für alle Füllhöhen 17 der Sole erheblich kleiner als das Messvolumen 6, das durch die Seitenwände 18 des Gehäuses der Messzelle 3 gebildet ist. In der dargestellten Ausführungsform ist der Verlauf der Seitenwände 18 des Gehäuses der Messzelle 3 kegelstumpfförmig dem Verlauf der fokussierten Anregungsstrahlung in der Messzelle 3 nachempfunden.

Die Ausführungsform aus Figur 2 zeigt auch, dass eine Eintrittsöffnung 19 und eine Austrittsöffnung 20 für die Sole aus der Messzelle 3 immer unterhalb des Flüssigkeitsniveaus 17 liegen. Die Anordnung der Austrittsöffnung 20 unterhalb der Füllhöhe 17 führt dazu, dass das Volumen abgeschlossen ist. Die Anordnung der Einlassöffnung 19 unterhalb der Füllhöhe 17 sorgt dafür, dass die zusätzliche Bildung von Wellen an der Oberfläche 8 der Sole durch das Einströmen der Sole in die Messzelle 3 verhindert wird.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

## Bezugszeichenliste

| 1 | System |
|---|---|
| 2 | Sole |
| 3 | Messzelle |
| 4 | Strömungsrichtung |
| 5 | Flüssigkeitsvolumen |
| 6 | Messvolumen |
| 7 | Gehäusewände |
| 8 | Oberfläche |
| 9 | Glasplatte |
| 10 | Laser |
| 11 | Anregungsstrahlung |
| 12 | fokussierende Optik |
| 13 | Spektrometer |
| 14 | Emissionsstrahlung |
| 15 | Spiegel |
| 16 | abbildende Optik |
| 17 | maximale Fülle |
| 18 | Seitenwände |
| 19 | Eintrittsöffnung |
| 20 | Austrittsöffnung |

## Patentansprüche

1. Verfahren zum Bestimmen eines Gehalts an Lithium in einer wässrigen Lösung (2), wobei das Verfahren die Schritte aufweist:

   A) Bereitstellen der das Lithium enthaltenden Lösung (2) mit einem Druck,

B) Aussetzen einer Oberfläche (8) der Lösung (2) gegenüber einem ein Gas enthaltenden Messvolumen (6),

wobei das Messvolumen (6) von einer Schutzplatte (9) begrenzt ist und wobei die Schutzplatte (9) einen minimalen Abstand A von der Oberfläche (8) aufweist, wobei der minimale Abstand A

$$A = \frac{10}{P} \, bar \; cm$$

oder mehr beträgt, wobei P der minimale Druck der Lösung (2) in dem Messvolumen (6) in bar ist,

C) Erzeugen und Abstrahlen impulsförmiger elektromagnetischer Anregungsstrahlung (11), wobei die Anregungsstrahlung (11)

eine Impulsdauer in einem Bereich von 1 Nanosekunde bis 50 Nanosekunden aufweist,
eine Energie pro Impuls von 10 mJ oder mehr aufweist und
eine Impulswiederholrate von 2 Hz oder weniger aufweist,

D) Einstrahlen der Anregungsstrahlung (11) durch die Schutzplatte (9) in das Messvolumen (6),
E) Fokussieren der Anregungsstrahlung (11) auf die Oberfläche (8), so dass ein Plasma der Lösung an der Oberfläche (8) generiert wird,
F) frequenzaufgelöstes Erfassen einer Intensität einer von dem Plasma erzeugten und durch die Schutzplatte (9) aus dem Messvolumen (6) austretenden Emissionsstrahlung (14) und
G) Bestimmen des Gehalts an Lithium in der Lösung (2) aus der Intensität.

2. Verfahren nach einem der vorhergehenden Ansprüche, wobei das Fokussieren in Schritt E) derart erfolgt, dass die numerische Apertur des Fokus der Anregungsstrahlung (11) auf der Oberfläche (8) 0,1 oder weniger, bevorzugt 0,05 oder weniger und besonders bevorzugt 0,02 oder weniger beträgt.

3. Verfahren nach einem der vorhergehenden Ansprüche, wobei das frequenzaufgelöste Erfassen in Schritt F) derart erfolgt, dass die numerische Apertur der Erfassung 0,15 oder weniger beträgt.

4. Verfahren nach einem der vorhergehenden Ansprüche, wobei das Messvolumen abgeschlossen ist und abschnittsweise von der Oberfläche (8) der Lösung (2) begrenzt ist.

5. Verfahren nach dem vorhergehenden Anspruch, wobei das Messvolumen (6) und die Lösung (2) in einem Behälter, vorzugsweise in einer Messzelle (3), eingeschlossen sind, wobei der Behälter eine Eintrittsöffnung (18) und eine Austrittsöffnung (19) für die Lösung (2) aufweist, wobei die Austrittsöffnung (19) vollständig unterhalb der Oberfläche (8) der Lösung (2) angeordnet ist.

6. Verfahren nach Anspruch 4 oder 5, wobei das Messvolumen (6) ein Volumen aufweist, das kleiner ist als ein Volumen, das gegeben ist durch das Produkt aus der Fläche der Oberfläche (8) der Lösung (2), die dem Gas ausgesetzt ist, und dem minimalen Abstand A zwischen der Oberfläche (8) und der Schutzplatte (9).

7. Verfahren nach einem der vorhergehenden Ansprüche, wobei das Gas ein Schutzgas, insbesondere Argon, ist.

8. Verfahren nach einem der vorhergehenden Ansprüche, wobei das Gas in das Messvolumen (6) eingeleitet oder aus diesem ausgeleitet wird, so dass der Abstand zwischen der Oberfläche (8) der Lösung (2) und der Schutzplatte (9) konstant ist.

9. Verfahren nach einem der vorhergehenden Ansprüche, wobei die Anregungsstrahlung (11) und eine Blickrichtung eines Detektors zum Erfassen der Intensität in Schritt F) in dem Messvolumen (6) koaxial verlaufen.

10. Verfahren nach einem der vorhergehenden Ansprüche, wobei die Anregungsstrahlung (11) und optional eine Blickrichtung eines Detektors zum Erfassen der Intensität in Schritt F) mit der Oberfläche (8) der Lösung (2) einen Winkel ungleich 90 Grad einschließt.

11. Verfahren nach einem der vorhergehenden Ansprüche, wobei das Erfassen der Intensität der Emissionsstrahlung in Schritt F) bei einer für Lithium charakteristischen Wellenlänge erfolgt.

12. Verfahren nach dem vorhergehenden Anspruch, wobei die Intensität bei der charakteristischen Wellenlänge mit einer Intensität eines anderen Bestandteils der Lösung (2), der eine konstante Konzentration aufweist, normiert wird.

13. Verfahren zum Gewinnen von Lithium aus einer Sole (2), mit den Schritten:

i) Durchleiten der Sole (2) mit dem Lithium durch einen Sorbens,

ii) Anlagern des Lithiums an den Sorbens,
iii) Durchleiten einer Desorptionslösung durch den Sorbens,
iv) Ablösen des Lithiums aus dem Sorbens mit der Desorptionslösung, und
v) Bestimmen eines Gehalts an Lithium zumindest in der Sole (2) in einer Flussrichtung (4) hinter dem Sorbens oder in der Desorptionslösung in der Flussrichtung (4) hinter dem Sorbens mit dem Verfahren nach einem der Ansprüche 1 bis 12.

14. Verfahren zum Gewinnen von Lithium aus einer Altbatterie, mit den Schritten:

   i) mechanisches Zerkleinern der Altbatterie,
   ii) Herauslösen von Lithium mit einer wässrigen Lösung aus der in Schritt i) zerkleinerten Altbatterie,
   iii) Durchleiten der wässrigen Lösung (2) mit dem Lithium durch einen Sorbens,
   iv) Anlagern des Lithiums an den Sorbens,
   v) Durchleiten einer Desorptionslösung durch den Sorbens,
   vi) Ablösen des Lithiums aus dem Sorbens mit der Desorptionslösung, und
   vii) Bestimmen eines Gehalts an Lithium zumindest in der wässrigen Lösung (2) in einer Flussrichtung (4) hinter dem Sorbens oder in der Desorptionslösung in der Flussrichtung (4) hinter dem Sorbens mit dem Verfahren nach einem der Ansprüche 1 bis 12.

15. System (1) zum Bestimmen eines Gehalts an Lithium in einer wässrigen Lösung (2), wobei das System (1) aufweist

   ein in einem Betrieb des Systems (1) ein Gas enthaltendes Messvolumen (6) und ein in dem Betrieb des Systems (1) die Lösung (2) aufnehmendes Flüssigkeitsvolumen (5),

      wobei das Messvolumen (6) und das Flüssigkeitsvolumen (5) derart ausgestaltet sind, dass das Gas und eine Oberfläche (8) der Lösung (2) in dem Betrieb des Systems miteinander in Kontakt sind,
      wobei das Flüssigkeitsvolumen (5) eine Eintrittsöffnung (19) und eine Austrittsöffnung (20) für die Lösung (2) aufweist,
      wobei das Messvolumen (6) von einer Schutzplatte (9) begrenzt ist und wobei die Schutzplatte (9) einen minimalen Abstand A oder mehr von der Austrittsöffnung (20) aufweist, wobei der minimale Abstand A

$$A = \frac{10}{P} \, bar \, cm$$

oder mehr beträgt, wobei P der minimale Druck der Lösung (2) in dem Messvolumen (6) in bar ist,

eine Strahlungsquelle (10) zum Erzeugen und Abstrahlen impulsförmiger elektromagnetischer Anregungsstrahlung (11), wobei die Strahlungsquelle (10) derart ausgestaltet ist, dass in dem Betrieb des Systems (1) die Anregungsstrahlung (11)

   eine Impulsdauer in einem Bereich von 1 Nanosekunde bis 50 Nanosekunden aufweist,
   eine Energie pro Impuls von 10 mJ oder mehr aufweist und
   eine Impulswiederholrate von 2 Hz oder weniger aufweist,
   wobei die Strahlungsquelle derart angeordnet und ausgestaltet ist, dass in dem Betrieb des Systems (1) die Anregungsstrahlung (11) durch die Schutzplatte (9) in das Messvolumen (6) eingestrahlt wird,

eine fokussierende Optik (12),
wobei die Optik (12) derart angeordnet und ausgestaltet ist, dass die Optik (12) in dem Betrieb des Systems (1) die Anregungsstrahlung (11) auf die Oberfläche (8) fokussiert, so dass ein Plasma der Lösung (2) an der Oberfläche (8) generiert wird,
ein Spektrometer (13),
wobei das Spektrometer (13) derart angeordnet und ausgestaltet ist, dass das Spektrometer (13) in dem Betrieb des Systems (1) eine Intensität einer von dem Plasma erzeugten und durch die Schutzplatte (9) aus dem Messvolumen (6) austretenden Emissionsstrahlung (14) frequenzaufgelöst erfasst, und
eine Auswertungseinrichtung,

   wobei die Auswertungseinrichtung derart mit dem Spektrometer (13) verbunden ist, dass die Auswertungseinrichtung in dem Betrieb des Systems (1) ein die Intensität repräsentierendes Signal von dem Spektrometer (13) empfängt, und
   wobei die Auswertungseinrichtung derart eingerichtet ist, dass die Auswertungseinrichtung in dem Betrieb des Systems (1) aus dem Signal den Gehalt an Lithium in der Lösung (2) berechnet.

Fig. 1

Fig. 2

Europäisches Patentamt
European Patent Office
Office européen des brevets

**EUROPÄISCHER RECHERCHENBERICHT**

**Nummer der Anmeldung**

EP 24 15 6120

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2002/159059 A1 (SABSABI MOHAMAD [CA] ET AL) 31. Oktober 2002 (2002-10-31) | 1-7, 9-12,15 | INV.<br>G01N21/03<br>G01N21/71 |
| Y | * Absätze [0038] - [0045]; Abbildungen 1, 2 * | 13,14 | |
| | ----- | | |
| X | KR 2020 0052506 A (KOREA ATOMIC ENERGY RES [KR]) 15. Mai 2020 (2020-05-15) | 1-12,15 | |
| Y | * das ganze Dokument * | 13,14 | |
| | ----- | | |
| Y | Frauenhofer Ipm: "LiMo research project gets underway Lithium mining in the Upper Rhine Valley: Measurement technology for the efficient extraction in geothermal power plants",<br>,<br>28. Februar 2023 (2023-02-28), Seiten 1-3, XP093179586,<br>Gefunden im Internet:<br>URL:https://www.ipm.fraunhofer.de/en/press-publications/press-releases/lithium-mining-geothermal-measurement.html<br>* das ganze Dokument * | 13,14 | |
| | ----- | | **RECHERCHIERTE SACHGEBIETE (IPC)** |
| A | LEE DONG-HYOUNG ET AL: "Highly Sensitive Analysis of Boron and Lithium in Aqueous Solution Using Dual-Pulse Laser-Induced Breakdown Spectroscopy",<br>ANALYTICAL CHEMISTRY,<br>Bd. 83, Nr. 24,<br>21. November 2011 (2011-11-21), Seiten 9456-9461, XP093178654,<br>US<br>ISSN: 0003-2700, DOI: 10.1021/ac2021689<br>* Figure 1; abstract; chapter Experimental * | 1-15 | G01N |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 28. Juni 2024 | Flentje, Farida |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 24 15 6120

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | RAIMUNDO IVO M. ET AL: "Detection of Low Lithium Concentrations Using?Laser-Induced Breakdown Spectroscopy (LIBS) in High-Pressure and High-Flow Conditions", APPLIED SPECTROSCOPY., Bd. 75, Nr. 11, 4. August 2021 (2021-08-04), Seiten 1374-1381, XP093178604, US ISSN: 0003-7028, DOI: 10.1177/00037028211035439 Gefunden im Internet: URL:http://journals.sagepub.com/doi/full-x ml/10.1177/00037028211035439> * Figure 1; abstract; chapter Experimental Section * ----- | 1-15 | |
| A | US 2018/003640 A1 (DAY DAVID R [US]) 4. Januar 2018 (2018-01-04) * Absätze [0030] - [0042]; Abbildungen 1-10 * ----- | 1-15 | **RECHERCHIERTE SACHGEBIETE (IPC)** |
| A | EP 3 023 771 B1 (SHENYANG INST OF AUTOMATION OF THE CHINESE ACADEMY OF SCIENCES [CN]) 19. August 2020 (2020-08-19) * Absätze [0017] - [0041]; Abbildung 1 * ----- | 1-15 | |

Der vorliegende Recherchenbericht wurde für alle Patentansprüche erstellt

| Recherchenort | Abschlußdatum der Recherche | Prüfer |
|---|---|---|
| München | 28. Juni 2024 | Flentje, Farida |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**    EP 24 15 6120

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2024

| Im Recherchenbericht angeführtes Patentdokument | Datum der Veröffentlichung | Mitglied(er) der Patentfamilie | | Datum der Veröffentlichung |
|---|---|---|---|---|
| US 2002159059 A1 | 31-10-2002 | AU | 2002231526 A1 | 19-08-2002 |
|  |  | PE | 20020978 A1 | 01-11-2002 |
|  |  | US | 2002149768 A1 | 17-10-2002 |
|  |  | US | 2002159059 A1 | 31-10-2002 |
|  |  | WO | 02063284 A2 | 15-08-2002 |
| KR 20200052506 A | 15-05-2020 | KEINE | | |
| US 2018003640 A1 | 04-01-2018 | KEINE | | |
| EP 3023771 B1 | 19-08-2020 | CN | 104297218 A | 21-01-2015 |
|  |  | EP | 3023771 A1 | 25-05-2016 |
|  |  | JP | 6198944 B2 | 20-09-2017 |
|  |  | JP | 2016522416 A | 28-07-2016 |
|  |  | US | 2016131581 A1 | 12-05-2016 |
|  |  | WO | 2015007041 A1 | 22-01-2015 |

EPO FORM P0461

Für nähere Einzelheiten zu diesem Anhang : siehe Amtsblatt des Europäischen Patentamts, Nr. 12/82